# EUROPEAN PATENT APPLICATION

(11) **EP 4 432 061 A1**
(43) Date of publication of application: **18.09.2024**
(21) Application number: 23745849.2
(22) Date of filing: 06.01.2023
(51) Int. Cl.: G06F 3/0481

(54) **PAGE INTERACTION METHOD, APPARATUS AND DEVICE, AND STORAGE MEDIUM**

(30) Priority: 27.01.2022 CN 202210101306
(71) Applicant: Beijing Zitiao Network Technology Co., Ltd., Beijing 100190 (CN)
(72) Inventor: ZHENG, Lingling, Beijing 100086 (CN); ZHANG, Wenshu, Beijing 100086 (CN)
(74) Representative: Dentons UK and Middle East LLP
(86) International application number: PCT/CN2023/070879
(87) International publication number: WO 2023/142964

(57) **Abstract**

The present invention provides a page interaction method, apparatus and device, and a storage medium. The method comprises: firstly, displaying a first image on a playback page of a target image set, at least one display object being displayed on the first image, and the first image belonging to the target image set; then, displaying, in an interaction region corresponding to a first display object, interaction indication information corresponding to the first display object, the interaction indication information being used for indicating an interaction operation corresponding to the interaction region; and then, when a trigger operation for a target interaction region corresponding to a target display object is received, indicating an interaction operation corresponding to the target interaction region.

## Description

### CROSS-REFERENCE TO RELATED APPLICATIONS

The present disclosure is based on and claims priority of Chinese application for invention 202210101306.0, filed on January 27, 2022, the disclosure of which is hereby incorporated into this disclosure by reference in its entirety.

### TECHNICAL FIELD

This disclosure relates to the field of data processing, in particular to a page interaction method and apparatus, a device, and a storage medium.

### BACKGROUND

With the continuous development of short video technology, the types of content presented based on data streams are becoming more and more diverse, such as image sets in recommendation video streams.

In related arts, an image set refers to a collection of images comprising a plurality of images. During the presentation of the image set, each image is displayed for a designated duration, and the images in the image set are played sequentially in a loop.

### SUMMARY

In a first aspect, the present disclosure provides a page interaction method, comprising:
displaying a first image on a playback page of a target image set, wherein at least one presentation object is presented on the first image and the first image belongs to the target image set;
displaying interaction indication information corresponding to a first presentation object within an interaction region corresponding to the first presentation object among the at least one presentation object; wherein the interaction indication information is configured to indicate an interaction operation corresponding to the interaction region;
in response to a trigger operation on a target interaction region corresponding to a target presentation object among the at least one presentation object, performing an interaction operation corresponding to the target interaction region.

In some embodiments, the in response to a trigger operation on a target interaction region corresponding to a target presentation object among the at least one presentation object, performing an interaction operation corresponding to the target interaction region comprises:
displaying a shooting preview page in response to the trigger operation on the target interaction region corresponding to the target presentation object among the at least one presentation object; wherein the target presentation object is presented on the shooting preview page;
matching, on the shooting preview page, the target presentation object with a shot object in a shooting image.

In some embodiments, an icon corresponding to a second presentation object on the first image is displayed on the shooting preview page; the method further comprises, after displaying the shooting preview page in response to the trigger operation on the target interaction region corresponding to the target presentation object among the at least one presentation object:
in response to a switching operation for the icon corresponding to the second presentation object, switching the target presentation object presented on the shooting preview page to the second presentation object;
matching, on the shooting preview page, the second presentation object with the shot object in the shooting image.

In some embodiments, at least one interaction control corresponding to the target presentation object is presented on the shooting preview page; wherein the method further comprises:
in response to a trigger operation on a target interaction control among the at least one interaction control, jumping from the shooting preview page to an interaction page corresponding to the target interaction control.

In some embodiments, in response to a trigger operation on a target interaction region corresponding to a target presentation object among the at least one presentation object, performing an interaction operation corresponding to the target interaction region comprises:
presenting an interaction page corresponding to the target interaction region in response to the trigger operation on the target interaction region corresponding to the target presentation object among the at least one presentation object; wherein the interaction page is configured to present interaction information for the target presentation object.

In some embodiments, in response to a trigger operation on a target interaction region corresponding to a target presentation object among the at least one presentation object, performing an interaction operation corresponding to the target interaction region comprises:
obtaining a virtual resource object corresponding to the target interaction region in response to the trigger operation on the target interaction region corresponding to the target presentation object among the at least one presentation object; wherein the virtual resource object has a correspondence with the target presentation object.

In some embodiments, at least one interaction control corresponding to a third presentation object among the at least one presentation object is further presented on the first image, and the method further comprises:
in response to a trigger operation on a target interaction control among the at least one interaction control corresponding to the third presentation object, presenting interaction information corresponding to the target interaction control on a preset area located at the bottom of the playback page of the target image set; wherein the interaction information has a correspondence with the third presentation object;
displaying the interaction page corresponding to the target interaction control in response to a pull-up operation for the preset area located at the bottom of the playback page; wherein the interaction information is presented on the interaction page.

In some embodiments, a preset service entrance corresponding to a fourth presentation object among the at least one presentation object is further presented on the first image; the method further comprises:
in response to a trigger operation on the preset service entrance, presenting service information corresponding to the preset service entrance on a preset area located at the bottom of the playback page of the target image set; wherein the service information has a correspondence with the fourth presentation object;
presenting an interaction page corresponding to the preset service entrance in response to a pull-up operation for the preset area located at the bottom of the playback page; wherein the service information is presented on the interaction page.

In a second aspect, the present disclosure provides a page interaction apparatus, comprising:
a first display module configured to display a first image on a playback page of a target image set; wherein at least one presentation object is presented on the first image and the first image belongs to the target image set;
a second display module configured to display interaction indication information corresponding to a first presentation object within an interaction region corresponding to the first presentation object among the at least one presentation object; wherein the interaction indication information is configured to indicate an interaction operation corresponding to the interaction region;
an operation performing module configured to perform, in response to a trigger operation on a target interaction region corresponding to a target presentation object among the at least one presentation object, an interaction operation corresponding to the target interaction region.

In a third aspect, the present disclosure provides a computer-readable storage medium having instructions stored therein, wherein the instructions, when executed on a terminal device, cause the terminal device to implement the video overlay display method described above.

In a fourth aspect, the present disclosure provides a device, comprising: a processor, a memory, and a computer program stored in the memory and executable on the processor, wherein the processor, when executing the computer program, implements the method described above.

In a fifth aspect, the present disclosure provides a computer program product, wherein the computer program product comprises a computer program/instructions, which implements the above method when executed by a processor.

In a sixth aspect, the present disclosure provides a computer program, comprising: instructions that, when executed by a processor, cause the processor to implement the page interaction method of any embodiments above.

### BRIEF DESCRIPTION OF THE DRAWINGS

Herein, the accompanying drawings, which are incorporated in and constitute a part of this specification, illustrate embodiments of the present disclosure and, together with the description, serve to explain the principles of the present disclosure.

In order to more clearly explain the embodiments of the present invention or the technical solutions in the prior art, a brief introduction will be given below for the drawings required to be used in the description of the embodiments or the prior art. It is obvious that, for a person skilled in the art, he or she may also acquire other drawings according to such drawings on the premise that no inventive effort is involved.
FIG. 1 is a flowchart of a page interaction method provided in some embodiments of the present disclosure;
FIG. 2 is a schematic diagram of a playback page of a target image set provided in some embodiments of the present disclosure;
FIG. 3 is a schematic diagram of a shooting preview page provided in some embodiments of the present disclosure;
FIG. 4 is a schematic diagram of another playback page of a target image set provided in some embodiments of the present disclosure;
FIG. 5 is a schematic diagram of a further playback page of a target image set provided in some embodiments of the present disclosure;
FIG. 6 is a schematic structure diagram of a page interaction apparatus provided in some embodiments of the present disclosure;
FIG. 7 is a schematic structure diagram of a page interaction device provided in some embodiments of the present disclosure.

### DETAILED DESCRIPTION

In order to better understand the above objects, features and advantages of the present disclosure, the scheme of the present disclosure will be further described below. It should be noted that, in the case of no conflict, the embodiments and the features of the embodiments of the present disclosure may be combined with each other.

Many specific details are set forth in the following description to facilitate a full understanding of the present disclosure, but the present disclosure can also be implemented in other ways different from those described herein. Obviously, embodiments described in the description are only some embodiments of the present disclosure, and are not all of embodiments thereof.

As mentioned above, the way of presenting image sets in related arts is relatively simple. How to enrich the ways of presenting image sets to meet the diverse needs of users for image set presentation is currently an urgent technical problem to be solved.

In order to solve the above technical problems, this disclosure provides a page interaction method capable of triggering interaction operations for presentation objects on an image of an image set, thereby enrich the ways of presenting an image set.

In order to enrich the ways of page interaction for presenting an image set, some embodiments of the present disclosure provide a page interaction method, in which a first image is displayed on a playback page of a target image set, wherein at least one presentation object is presented on the first image and the first image belongs to the target image set; interaction indication information corresponding to a first presentation object is then displayed within an interaction region corresponding to the first presentation object, wherein the interaction indication information is configured to indicate an interaction operation corresponding to the interaction region; in response to receiving a trigger operation on a target interaction region corresponding to a target presentation object, an interaction operation corresponding to the target interaction region is indicated. Thus, the embodiments of the present disclosure can trigger an interaction operation for a target presentation object presented on the first image of the target image set, thereby enriching the ways of page interaction in the presenting of the image set.

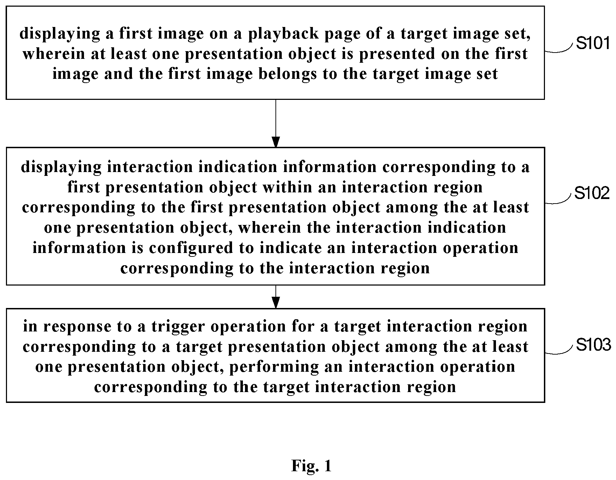

On this basis, some embodiments of the present disclosure provide a page interaction method. FIG. 1 is a flowchart of a page interaction method provided in some embodiments of the present disclosure. The method comprises the following steps.

S101: displaying a first image on a playback page of a target image set,
wherein at least one presentation object is presented on the first image and the first image belongs to the target image set.

In the embodiments of the present disclosure, an image set refers to a collection of images comprising a plurality of images. A target image set may belong to a video stream and may be an image set in the video stream. The video stream may comprise not only an image set, but also other types of content such as videos.

In practical applications, each image of the target image set has a presentation duration. During the presentation process of the target image set, the images in the target image set are played sequentially in a loop, and each image is displayed based on its corresponding presentation duration. In addition, left or right sliding may trigger the switching between adjacent images in the target image set.

In some embodiments of the present disclosure, the first image may be any image of the target image set. In response to the first image being displayed on the playback page of the target image set, at least one presentation object is presented on the first image. The presentation object may be a presentation item on the first image, such as jewelry, clothing, etc., and may also be a presentation landscape on the first image, etc.

S102: displaying interaction indication information corresponding to a first presentation object within an interaction region corresponding to the first presentation object among the at least one presentation object,
wherein the interaction indication information is configured to indicate an interaction operation corresponding to the interaction region.

In some embodiments of the present disclosure, the first presentation object may be any presentation object on the first image. On the playback page of the target image set, the first presentation object on the first image has a corresponding interaction region, within which interaction indication information corresponding to the first presentation object is presented. The interaction indication information may be configured to indicate an interaction operation corresponding to the interaction region. The interaction indication information may be information indicating users to trigger corresponding interaction operations, such as "Try on * * *", "Try wearing * * *", "Explore 36 Processes", etc.

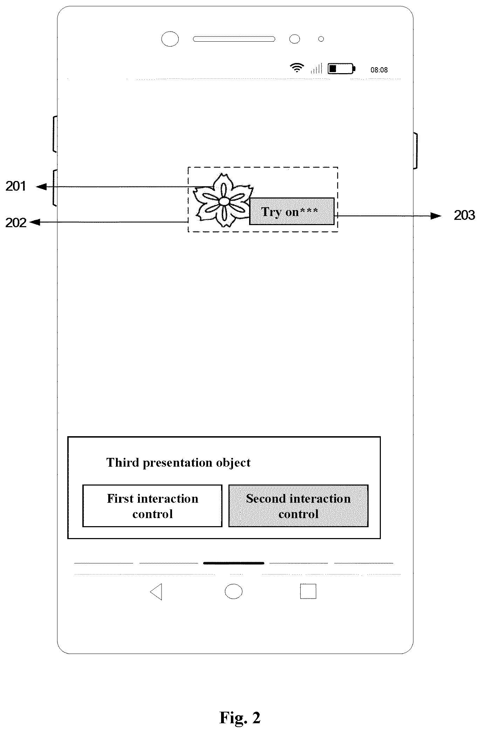

Referring to FIG. 2, a schematic diagram of a playback page of a target image set provided in some embodiments of the present disclosure is shown, wherein a first image is displayed on the playback page, and at least one presentation object, comprising a first presentation object 201, is presented on the first image. In an interaction region 202 corresponding to the first presentation object 201, interaction indication information 203 corresponding to the first presentation object 201 is presented. Through the interaction indication information 203, a user may be aware of an interaction operation to be triggered by clicking on the interaction region 202. For example, in response to the interaction indication information being "Try on * * *", the user may know through this interaction indication information that the interaction operation to be triggered by clicking on the interaction region is to try on "***".

In some embodiments, the first presentation object on the playback page of the target image set may correspond to one or more interaction regions, each of which corresponding to at least one piece of interaction indication information that is configured to indicate an interaction operation to be triggered by the user clicking on the interaction region, and so on.

In some embodiments, the interaction region corresponding to the first presentation object may comprise a presentation area of the first presentation object on the first image. As shown in FIG. 2, the interaction region 202 comprises a presentation area of the first presentation object 201. In some embodiments of the present disclosure, the presentation object on the image is embodied as an anchor. By clicking on the first presentation object presented on the first image, a user may trigger an interaction operation corresponding to the first presentation object, thereby enriching the ways of page interaction in the presentation of the image set.

In some embodiments, in order to prompt the user for a clickable anchor on the first image, the first presentation object on the first image displayed on the playback page of the target image set may be in the Graphics Interchange Format, etc. Additionally, an icon of the first presentation object may be presented in the interaction region corresponding to the first presentation object, further prompting the user for a clickable anchor.

S103: in response to a trigger operation on a target interaction region corresponding to a target presentation object among the at least one presentation object, performing an interaction operation corresponding to the target interaction region.

In some embodiments of the present disclosure, the target presentation object may be a selected presentation object on the first image displayed on the playback page of the target image set. In response to receiving a trigger operation for the target interaction region corresponding to the target presentation object, an interaction operation corresponding to the target interaction region is performed.

In some embodiments, a shooting preview page is displayed in response to the trigger operation on the target interaction region corresponding to the target presentation object among the at least one presentation object on the first image, wherein the target presentation object is presented on the shooting preview page. Then, on the shooting preview page, the target presentation object is matched with a shot object in a shooting image.

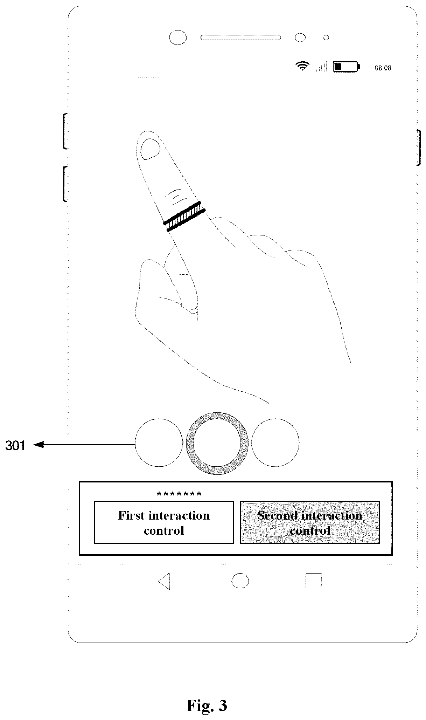

In practical applications, in response to receiving a trigger operation for the target interaction region corresponding to the target presentation object on the first image displayed on the playback page of the target image set, a shooting preview page is displayed. As shown in FIG. 3, a schematic diagram of a shooting preview page provided in some embodiments of the present disclosure is shown, wherein a target presentation object, such as a "ring" shown in FIG. 3, is presented on the shooting preview page. By matching a shot object on the shooting preview page with the target presentation object, a shooting effect of successfully matching the "ring" with the shot object, such as a "hand," may be presented, allowing the shooting preview image to show the user a try-on effect of wearing the target presentation object (i.e., the "ring") on the shot object (i.e., the "hand").

In practical applications, in response to receiving a trigger operation for the target interaction region corresponding to the target presentation object, call the shooter device to open the camera and display a shooting preview image. By matching the target presentation object with a real shot object on the shooting preview image, an interaction effect such as a try-on effect may be achieved.

In some embodiments, an icon corresponding to a second presentation object on the first image may be displayed on the shooting preview page. FIG. 3 shows an icon 301 corresponding to a second presentation object. By switching between icons displayed at the bottom of the page, switch the presentation object displayed on the shooting preview page.

In practical applications, in response to a switching operation for an icon corresponding to a second presentation object displayed on the shooting preview page, the target presentation object presented on the shooting preview page is switched to the second presentation object. Then, on the shooting preview page, the second presentation object is matched with the shot object in the shooting image. For example, in response to the target presentation object being ring A and the second presentation object is ring B, during the process of displaying ring A on the shooting preview page, the user may perform an interaction operation of switching ring A displayed on the shooting preview image to ring B by clicking on the icon of the second presentation object displayed on the shooting preview page. By matching ring B with the shot object (i.e., the "hand") in the shooting image, an effect of trying on ring B may be achieved for the user.

In some embodiments, at least one interaction control corresponding to the target presentation object may be further displayed on the shooting preview page. FIG. 3 shows a first interaction control and a second interaction control, which may be preset interaction operation controls, such as a "View Details" control, and so on. By clicking on the first or second interaction control, a corresponding interaction operation may be triggered.

In some embodiments, in response to a trigger operation on a target interaction control among the at least one interaction control on the shooting preview page, the shooting preview page is switched to an interaction page corresponding to the target interaction control. In response to the target interaction control being a "View Details" control, after the target interaction control is clicked, the shooting preview page may be switched to a detailed information display page of a current presentation object (such as the target presentation object) on the shooting preview page, and detailed information of the current presentation object is presented on the detailed information display page.

In the page interaction method provided in the embodiments of the present disclosure, first, a first image is displayed on a playback page of a target image set, wherein at least one presentation object is presented on the first image, and the first image belongs to the target image set; interaction indication information corresponding to a first presentation object is then displayed within an interaction region corresponding to the first presentation object, wherein the interaction indication information is configured to indicate an interaction operation corresponding to the interaction region; in response to receiving a trigger operation on a target interaction region corresponding to a target presentation object, an interaction operation corresponding to the target interaction region is indicated. Thus, the embodiments of the present disclosure can trigger an interaction operation for a target presentation object presented on the first image of the target image set, thereby enriching the ways of page interaction in the display of the image set.

Based on the above embodiments, some embodiments of the present disclosure further provides several types of interaction operations for presentation objects on the first image displayed on the playback page of the target image set.

In some embodiments of the present disclosure, in response to a trigger operation on a target interaction region corresponding to a target presentation object among the at least one presentation object on the first image displayed on the playback page of the target image set, an interaction page corresponding to the target interaction region is displayed, wherein the interaction page is configured to present interaction information of the target presentation object.

In practical applications, in response to receiving a trigger operation for a target interaction region corresponding to a target presentation object, the playback page of the target image set may be switched to an interaction page corresponding to the target interaction region, and interaction information of the target presentation object may be displayed on the interaction page. For example, in response to receiving a trigger operation for a target interaction region corresponding to a target presentation object on the first image displayed on the playback page of the target image set as shown in FIG. 2, an interaction page corresponding to the target interaction region may be displayed. Interaction information of the target presentation object, such as detailed information, attribute information, etc., is presented on the interaction page.

In other embodiments, in response to a trigger operation for a target interaction region corresponding to a target presentation object among the at least one presentation object on the first image displayed on the playback page of the target image set, a virtual resource object corresponding to the target interaction region is obtained, wherein the virtual resource object has a correspondence with the target presentation object.

In some embodiments, in response to receiving a trigger operation for a target interaction region corresponding to a target presentation object, a Virtual Resource Object Collection pop-up window may be presented on the playback page of the target image set, wherein a "Collect" control may be provided on the Virtual Resource Object Collection pop-up window. After the user clicks on the "Collect" control, a virtual resource object corresponding to the target presentation object is obtained and a binding relationship is established between the virtual resource object and the user. The virtual resource object may comprise an easter egg effect resource, etc.

In other embodiments, in response to receiving a trigger operation for a target interaction region corresponding to a target presentation object, a virtual resource object may be obtained and presented on the playback page of the target image set. The virtual resource object may comprise an easter egg effect resource, etc.

Note that, in the embodiments of the present disclosure, the interaction operations triggered for the presentation objects on the first image presented on the playback page of the target image set are not limited to the above types of interaction operations.

The page interaction method provided by the embodiments of the present disclosure can provide at least the above page interaction ways for presentation objects on an image of an image set, thereby enriching the ways of interaction of image set presentation.

On the basis of the above embodiments, at least one interaction control corresponding to a third presentation object may be further presented in the first image, wherein the third presentation object may be any presentation object on the first image presented on the playback page of the target image set.

In some embodiments, in response to a trigger operation on a target interaction control among the at least one interaction control corresponding to the third presentation object, interaction information corresponding to the target interaction control is presented on a preset area located at the bottom of the playback page of the target image set, wherein the interaction information has a correspondence with the third presentation object. An interaction page corresponding to the target interaction control is presented, in response to a pull-up operation for the preset area located at the bottom of the playback page, wherein interaction information is presented on the interaction page.

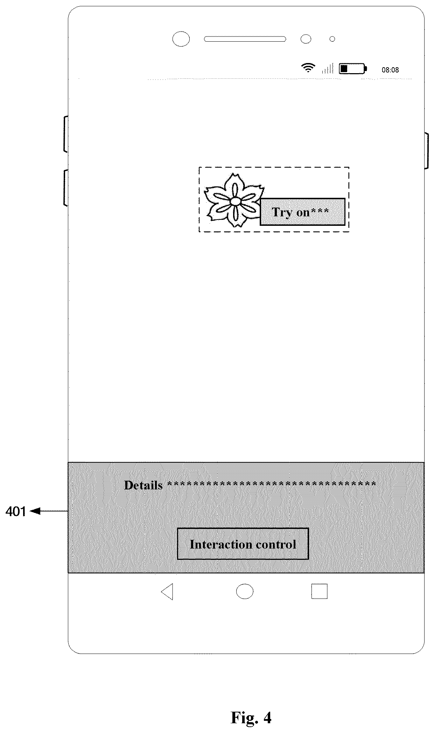

As shown in FIG. 2, two interaction controls are presented on the playback page of the target image set. In response to receiving a trigger operation for a target interaction control, interaction information corresponding to the target interaction control is presented on a preset area located at the bottom of the playback page of the target image set. FIG. 4 is a schematic diagram of another playback page of a target image set provided in some embodiments of the present disclosure. On a preset area 401 located at the bottom of the playback page, interaction information corresponding to the target interaction control is presented. For example, in response to the target interaction control being the "View Details" control, after the user clicks on the "View Details" control, detailed information of a third presentation object, etc. is presented on a preset area 401 located at the bottom of the playback page of the target image set.

In practical applications, in response to receiving a pull-up operation for the preset area 401 located at the bottom of the playback page of the target image set, an interaction page corresponding to the target interaction control may be presented with a pulled-up effect, wherein interaction information of a third presentation object is presented on the interaction page.

In other embodiments, a preset service entrance corresponding to a fourth presentation object may be further presented on the first image displayed on the playback page of the target image set. The fourth presentation object may be any presentation object presented on the first image, and the preset service entrance may be a mini-program service entrance, the preset service entrance being related to the fourth presentation object.

In practical applications, in response to a trigger operation for the preset service entrance, service information corresponding to the preset service entrance is presented on a preset area located at the bottom of the playback page of the target image set, wherein the service information has a correspondence with the fourth presentation object. Then, an interaction page corresponding to the preset service entrance is presented in response to a pull-up operation in the preset area located at the bottom of the playback page, wherein the service information is presented on the interaction page.

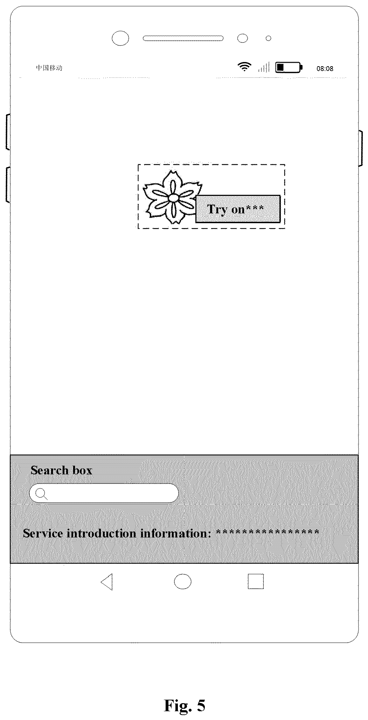

Taking a mini-program service entrance as an example, a mini-program service entrance may be presented on the playback page of the target image set as shown in FIG. 2. In response to receiving a trigger operation for the mini-program service entrance, service information corresponding to the mini-program service entrance may be presented on a preset area located at the bottom of the playback page of the target image set. FIG. 5 shows a schematic diagram of a further playback page of a target image set provided by some embodiments of the present disclosure.

In response to receiving a pull-up operation for the preset area located at the bottom of the playback page of the target image set, an interaction page corresponding to the preset service entrance may be presented with a pulled-up effect, wherein service information related to a fourth presentation object is presented on the interaction page.

In the embodiments of the present disclosure, an interaction control and a preset service entrance related to the presentation objects on the first image may be presented on the playback page of the target image set. A user may perform corresponding interaction operations by clicking on the interaction control or the preset service entrance, thereby further enriching the ways of page interaction of the image set presentation.

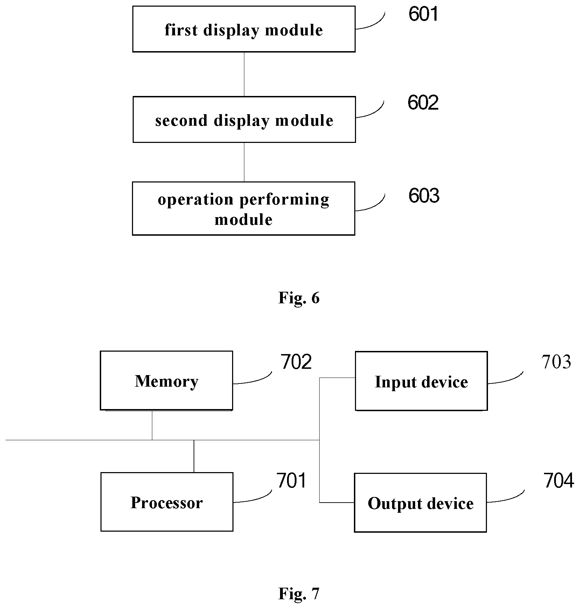

On the basis of the same inventive concept of the above embodiments, some embodiments of the present disclosure further provides a page interaction apparatus. FIG. 6 is a schematic structural diagram of a page interaction apparatus provided by some embodiments of the present disclosure. The apparatus comprises:
a first display module 601 for displaying a first image on a playback page of a target image set; wherein at least one presentation object is presented on the first image and the first image belongs to the target image set;
a second display module 602 for displaying interaction indication information corresponding to a first presentation object within an interaction region corresponding to the first presentation object among the at least one presentation object; wherein the interaction indication information is configured to indicate an interaction operation corresponding to the interaction region;
an operation performing module 603 for performing, in response to a trigger operation on a target interaction region corresponding to a target presentation object among the at least one presentation object, an interaction operation corresponding to the target interaction region.

In some embodiments, the operation performing module comprises:
a first display submodule configured to display a shooting preview page in response to the trigger operation on the target interaction region corresponding to the target presentation object among the at least one presentation object; wherein the target presentation object is presented on the shooting preview page;
a first match submodule for matching, on the shooting preview page, the target presentation object with a shot object in a shooting image.

In some embodiments, an icon corresponding to a second presentation object on the first image is displayed on the shooting preview page; the apparatus further comprises:
a switch submodule for switching, in response to a switching operation for the icon corresponding to the second presentation object, the target presentation object presented on the shooting preview page to the second presentation object;
a second match submodule for matching, on the shooting preview page, the second presentation object with the shot object in the shooting image.

In some embodiments, at least one interaction control corresponding to the target presentation object is presented on the shooting preview page; the apparatus further comprises:
a redirection submodule for redirecting, in response to a trigger operation on a target interaction control among the at least one interaction control, the display from the shooting preview page to an interaction page corresponding to the target interaction control.

In some embodiments, the operation performing module comprises:
a first display submodule configured to present an interaction page corresponding to the target interaction region in response to the trigger operation on the target interaction region corresponding to the target presentation object among the at least one presentation object; wherein the interaction page is configured to display interaction information of the target presentation object.

In some embodiments, the operation performing module comprises:
an acquisition submodule for obtaining a virtual resource object corresponding to the target interaction region in response to the trigger operation on the target interaction region corresponding to the target presentation object among the at least one presentation object; wherein the virtual resource object has a correspondence with the target presentation object.

In some embodiments, at least one interaction control corresponding to a third presentation object among the at least one presentation object is further presented on the first image, and the apparatus further comprises:
a third display module configured to display, in response to a trigger operation on a target interaction control among the at least one interaction control corresponding to the third presentation object, interaction information corresponding to the target interaction control on a preset area located at the bottom of the playback page of the target image set; wherein the interaction information has a correspondence with the third presentation object;
a fourth display module configured to display the interaction page corresponding to the target interaction control in response to a pull-up operation for the preset area located at the bottom of the playback page; wherein the interaction information is presented on the interaction page.

In some embodiments, a preset service entrance corresponding to a fourth presentation object among the at least one presentation object is further presented on the first image; the apparatus further comprises:
a fifth display module configured to display, in response to a trigger operation on the preset service entrance, service information corresponding to the preset service entrance on a preset area located at the bottom of the playback page of the target image set; wherein the service information has a correspondence with the fourth presentation object;
a sixth display module configured to present an interaction page corresponding to the preset service entrance in response to a pull-up operation for the preset area located at the bottom of the playback page; wherein the service information is presented on the interaction page.

In the page interaction apparatus provided in the embodiments of the present disclosure, first, a first image is displayed on a playback page of a target image set, wherein at least one presentation object is presented on the first image, and the first image belongs to the target image set; interaction indication information corresponding to a first presentation object is then displayed within an interaction region corresponding to the first presentation object, wherein the interaction indication information is configured to indicate an interaction operation corresponding to the interaction region; when a trigger operation on a target interaction region corresponding to a target presentation object is received, an interaction operation corresponding to the target interaction region is performed. Thus, the embodiments of the present disclosure can trigger an interaction operation for a target presentation object presented on the first image of the target image set, thereby enriching the ways of page interaction in the image set presentation.

In addition to the above method and apparatus, some embodiments of the present disclosure further provides a computer-readable storage medium stored thereon instructions that, when executed on a terminal device, cause the terminal device to implement the page interaction method of the present disclosure.

Some embodiments of the present application further provides a computer program product comprising a computer program/instructions that, when executed by a processor, implement the page interaction method of the present disclosure.

In addition, some embodiments of the present disclosure further provides a page interaction device. As shown in FIG. 7, the page interaction device may comprise:
a processor 701, a memory 702, an input device 703, and an output device 704. The page interaction device may comprise one or more processors 701. FIG. 7 shows one processor, as an example. In some embodiments of the present disclosure, the processor 701, memory 702, input device 703, and output device 704 may be connected through a bus or other means, wherein FIG. 7 shows a bus connection, as an example.

The memory 702 may be used to store software programs and modules. The processor 701 executes software programs and modules stored in memory 702 to perform various application functions and data processing of the page interaction device. The memory 702 may mainly comprise a program storage area and a data storage area, wherein the program storage area may store an operating system, and applications required for at least one function, etc. Moreover, the memory 702 may comprises high speed random access memory, or may comprise non-volatile memory, such as at least one magnetic storage device, a flash memory device or other non-volatile solid-state storage device. The input device 703 may be used to receive figure or character information inputted and generate a signal input related to a user setup or function control of the page interaction device.

In the embodiments, the processor 701 will load executable files corresponding to the processes of one or more applications into the memory 702 in accordance with the following instructions, and the processor 701 will execute the applications stored in the memory 702, thereby implementing the various functions of the page interaction device described above.

Note that, in this description, the use of relational terms, if any, such as "first" and "second" and the like are used solely to distinguish one from another entity or action without necessarily requiring or implying any actual such relationship or order between such entities or actions. Further, terms "comprise", "comprise" or their any other variations are intended to encompass non-exclusive composition, so that a process, method, product or device comprising a series of factors may comprise not only these factors, but also other factors that are not listed explicitly, or factors intrinsic to this process, method, product or device. Without limitation, a factor defined by wording "comprise one..." does not exclude the existence of other same factors in a process, method, product or device comprising such factor.

The above descriptions are only specific embodiments of the present disclosure, so that those skilled in the art can understand or implement the present disclosure. Various modifications to these embodiments will be apparent to those skilled in the art, and the generic principles defined herein may be implemented in other embodiments without departing from the spirit or scope of the present disclosure. Accordingly, the present disclosure should not be limited to the specific embodiments described herein, but should be accorded the broadest scope consistent with the principles and novel features disclosed herein.

## Claims

1. A page interaction method, comprising:
displaying a first image on a playback page of a target image set, wherein at least one presentation object is presented on the first image and the first image belongs to the target image set;
displaying, within an interaction region corresponding to a first presentation object among the at least one presentation object, interaction indication information corresponding to the first presentation object wherein the interaction indication information is configured to indicate an interaction operation corresponding to the interaction region; and
performing, in response to a trigger operation on a target interaction region corresponding to a target presentation object among the at least one presentation object, an interaction operation corresponding to the target interaction region.

2. The page interaction method according to claim 1, wherein the performing, in response to the trigger operation on the target interaction region corresponding to the target presentation object among the at least one presentation object, the interaction operation corresponding to the target interaction region comprises:
displaying a shooting preview page, in response to the trigger operation on the target interaction region corresponding to the target presentation object among the at least one presentation object, wherein the target presentation object is presented on the shooting preview page; and
matching, on the shooting preview page, the target presentation object with a shot object in a shooting image.

3. The page interaction method according to claim 2, wherein an icon corresponding to a second presentation object on the first image is displayed on the shooting preview page,
the page interaction method further comprising, after the displaying the shooting preview page in response to the trigger operation on the target interaction region corresponding to the target presentation object among the at least one presentation object:
switching the target presentation object presented on the shooting preview page to the second presentation object, in response to a switching operation for the icon corresponding to the second presentation object; and
matching, on the shooting preview page, the second presentation object with the shot object in the shooting image.

4. The page interaction method according to claim 2, wherein at least one interaction control corresponding to the target presentation object is displayed on the shooting preview page,
the page interaction method further comprising:
jumping, in response to a trigger operation on a target interaction control among the at least one interaction control, from the shooting preview page to an interaction page corresponding to the target interaction control.

5. The page interaction method according to claim 1, wherein the performing, in response to the trigger operation on the target interaction region corresponding to the target presentation object among the at least one presentation object, the interaction operation corresponding to the target interaction region comprises:
presenting an interaction page corresponding to the target interaction region, in response to the trigger operation on the target interaction region corresponding to the target presentation object among the at least one presentation object, wherein the interaction page is configured to present interaction information for the target presentation object.

6. The page interaction method according to claim 1, wherein the performing, in response to the trigger operation on the target interaction region corresponding to the target presentation object among the at least one presentation object, the interaction operation corresponding to the target interaction region comprises:
obtaining a virtual resource object corresponding to the target interaction region, in response to the trigger operation on the target interaction region corresponding to the target presentation object among the at least one presentation object, wherein the virtual resource object has a correspondence with the target presentation object.

7. The page interaction method according to any one of claims 1 to 6, wherein at least one interaction control corresponding to a third presentation object among the at least one presentation object is further presented on the first image,
the page interaction method further comprising:
presenting, in response to a trigger operation on a target interaction control among the at least one interaction control corresponding to the third presentation object, interaction information corresponding to the target interaction control on a preset area located at a bottom of the playback page of the target image set, wherein the interaction information has a correspondence with the third presentation object.

8. The page interaction method according to claim 7, further comprising:
presenting an interaction page corresponding to the target interaction control, in response to a pull-up operation for the preset area located at the bottom of the playback page, wherein the interaction information is presented on the interaction page.

9. The page interaction method according to any one of claims 1 to 6, wherein a preset service entrance corresponding to a fourth presentation object among the at least one presentation object is further presented on the first image,
the page interaction method further comprising:
presenting service information corresponding to the preset service entrance on a preset area located at a bottom of the playback page of the target image set, in response to a trigger operation on the preset service entrance, wherein the service information has a correspondence with the fourth presentation object.

10. The page interaction method according to claim 9, further comprising:
presenting an interaction page corresponding to the preset service entrance, in response to a pull-up operation for the preset area located at the bottom of the playback page, wherein the service information is presented on the interaction page.

11. A page interaction apparatus, comprising:
a first display module configured to display a first image on a playback page of a target image set, wherein at least one presentation object is presented on the first image and the first image belongs to the target image set;
a second display module configured to display, within an interaction region corresponding to a first presentation object among the at least one presentation object, interaction indication information corresponding to the first presentation object wherein the interaction indication information is configured to indicate an interaction operation corresponding to the interaction region; and
an operation performing module configured to perform, in response to a trigger operation on a target interaction region corresponding to a target presentation object among the at least one presentation object, an interaction operation corresponding to the target interaction region.

12. A computer-readable storage medium, wherein the computer-readable storage medium stores thereon instructions that, when executed on a terminal device, cause the terminal device to implement a page interaction method according to any one of claims 1 to 10.

13. A page interaction device, comprising: a memory, a processor, and a computer program stored in the memory and executable on the processor, wherein the processor, when executing the computer program, implements a page interaction method according to any one of claims 1 to 10.

14. A computer program product, wherein the computer program product comprises a computer program/instructions that, when executed by a processor, implement a page interaction method according to any one of claims 1 to 10.

15. A computer program, comprising:
instructions that, when executed by a processor, cause the processor to implement a page interaction method according to any one of claims 1 to 10.
